# EUROPÄISCHE PATENTANMELDUNG

(11) **EP 3 239 539 A1**
(43) Veröffentlichungstag der Anmeldung: **01.11.2017**
(21) Anmeldenummer: 16167176.3
(22) Anmeldetag: 27.04.2016
(51) Int. Cl.: F16B 13/06

(54) **ANKER MIT WELLENFÖRMIGER HÜLSE**

(71) Anmelder: HILTI Aktiengesellschaft, 9494 Schaan (LI)
(72) Erfinder: Velten, Simon, 6710 Nenzing (AT); Schaeffer, Marc, 8852 Altendorf (CH)
(74) Vertreter: Hilti Aktiengesellschaft Corporate Intellectual Property

(57) **Zusammenfassung**

Die Erfindung betrifft einen Anker mit einer Hülse, einem Bolzen, welcher die Hülse durchläuft, und zumindest einem Spreizelement, welches der Hülse axial vorgelagert ist und welches sich axial an der Hülse abstützt, wobei der Bolzen einen Spreizbereich für das Spreizelement aufweist. Erfindungsgemäss ist vorgesehen, dass die Hülse eine Wellenform mit axial verlaufenden Wellenbergen, in denen sowohl der Aussenradius der Hülse als auch der Innenradius der Hülse jeweils ein Maximum aufweisen, und mit axial verlaufenden Wellentälern, in denen sowohl der Aussenradius der Hülse als auch der Innenradius der Hülse jeweils ein Minimum aufweisen, aufweist.

## Beschreibung

Die Erfindung betrifft einen Anker gemäss dem Oberbegriff des Anspruchs 1. Ein solcher Anker ist ausgestatte mit einer Hülse, einem Bolzen, welcher die Hülse durchläuft, und zumindest einem Spreizelement, welches der Hülse axial vorgelagert ist und welches sich axial an der Hülse abstützt, wobei der Bolzen einen Spreizbereich für das Spreizelement aufweist.

Die DE 202009013641 U1 zeigt einen Hinterschnittanker zur Befestigung von Fassadenplatten aus Naturwerkstein an einer Unterkonstruktion. Dieser Anker weist als Spreizelement einen wellenförmigen, geschlossenen Spreizring auf.

Aus der DE 102007060956 A1 geht ein Spreizanker zum Verbinden einer Steinplatte mit einer Betonplatte hervor, wobei der Spreizanker ein spreizbares Element aufweist, das durch Aufschieben auf einen Spreizkörper spreizbar ist. Der Spreizanker weist ferner ein kraftübertragendes Element auf, mit dem eine Kraft zum Aufschieben des spreizbaren Elements auf den Spreizkörper übertragbar ist, wobei das kraftübertragende Element in Kraftübertragungsrichtung steifer als quer dazu ist. Beispielsweise kann das kraftübertragende Element eine Hülse mit einem zylindrischen Mittelloch und einem in Umfangsrichtung wellenförmigen Aussenumfang sein.

Die DE 8416683U1 zeigt einen Spreizdübel, welcher als Stauchzone eine Kunststoffhülse aufweist, die aussenseitige Längsrippen als Mitdrehsicherung aufweist. Weitere stauchbare Hülsen mit aussenseitigen Rippen gehen aus der DE 102006053226 A1 hervor.

Die DE102004010727 A1 zeigt einen Spreizanker, bei dem als Spreizelemente Spreizlappen vorgesehen sind, die durch Schlitze getrennt sind. An den Rändern der Spreizlappen, welche an den Schlitzen gebildet sind, verlaufen die Spreizelemente tangential zur Längsachse des Ankers, das heisst sie stehen dort nach aussen vor.

Die EP 2848825 A1 schlägt vor, an den als Spreizlappen ausgebildeten Spreizelementen zumindest einen ins Hülseninnere vorstehenden und eine lokale Wandstärkeerhöhung bildenden Steg und am Bolzen eine korrespondierende Nut vorzusehen, die den Steg vor dem Spreizen der Spreizlappen zumindest teilweise aufnimmt. Da die Wandstärke am Steg lokal erhöht ist, kann beim Spreizen eine besonders grosse maximale radiale Ausdehnung der Spreizelemente und somit eine besonders gute Verankerung erreicht werden.

Aus der DE 19538898 C2 geht ein Schlaganker mit einer zusätzlichen Spreizhülse hervor. Diese Spreizhülse weist einen Steg auf, welche radial durch den Dübelkörper hindurchgeführt ist. Beim Setzen des Schlagangers wird ein Einschlagwerkzeug auf den Steg aufgesetzt und durch Wirkung des Einschlagwerkzeugs auf den Steg die Spreizhülse axial nach vorne geschoben. Der im Inneren des Dübelkörpers angeordnete Steg kann zur Stabilisierung wellenförmig ausgebildet sein.

Die DE 3336168 C2 zeigt einen Spanndübel, wobei auf der Aussenfläche des Spannbereichs des Spanndübels eine Riffelung vorgesehen werden kann, die ein zu leichtes Herausziehen des Spanndübels aus dem Mauerwerk verhindern kann, da durch die Riffelung ein höherer Reibungsfaktor entsteht. Alternativ kann statt einer Riffelung auch eine Wellenform mit Wellenstrukturen vorgesehen werden, welche den Dübel ringartig umlaufen.

Die US 4753559 A zeigt eine zweischalige Spreizhülse für einen Gebirgsanker, welche eine Wellenform mit Wellenstrukturen aufweist, welche die Spreizhülse ringartig umlaufen.

Aufgabe der Erfindung ist es, einen Anker anzugeben, welcher bei hoher Zuverlässigkeit und einfacher Anwendbarkeit besonders günstig in der Herstellung ist und dabei besonders gute Lastwerte aufweist, vorzugsweise auch bei Querbelastung.

Die Aufgabe wird erfindungsgemäss durch einen Anker mit den Merkmalen des Anspruchs 1 gelöst. Bevorzugte Ausführungsformen sind in den abhängigen Ansprüchen angegeben.

Ein erfindungsgemässer Anker ist dadurch gekennzeichnet, dass die Hülse eine Wellenform mit axial verlaufenden Wellenbergen, in denen sowohl der Aussenradius der Hülse als auch der Innenradius der Hülse jeweils ein Maximum aufweisen, und mit axial verlaufenden Wellentälern, in denen sowohl der Aussenradius der Hülse als auch der Innenradius der Hülse jeweils ein Minimum aufweisen, aufweist.

Ein Grundgedanke der Erfindung kann darin gesehen werden, dass die Hülse eine Wellenform aufweist, bei der sich Wellenberge und Wellentäler in Umfangsrichtung der Hülse betrachtet abwechseln. Die Wellenform ist dabei, insbesondere phasengleich, sowohl auf der Hülseninnenseite als auch auf der Hülsenaussenseite gegeben, das heisst an einem Wellenberg ist sowohl der Innenradius der Hülse als auch der Aussenradius der Hülse maximal, insbesondere lokal maximal, und an einem Wellental ist sowohl der Innenradius der Hülse als auch der Aussenradius der Hülse minimal, insbesondere lokal minimal.

Aufgrund dieser Wellenform kann die erfindungsgemässe Hülse denselben Ringraum wie eine Hülse aus Vollmaterial abdecken, dies jedoch bei einem im Vergleich zur Hülse aus Vollmaterial wesentlich geringen Materialaufwand. Insbesondere können bei einer erfindungsgemässen Hülse an den Wellentälern Berührpunkte zum Abstützen des Bolzens an der Hülse und an den Wellenbergen Berührpunkte zum Abstützen der Hülse an der Bohrlochwand gebildet werden. Damit kann erfindungsgemäss ohne wesentliche Einbussen in der Funktionalität eine besonders kostengünstige Hülse erhalten werden. Vorzugsweise kann eine solche Hülse beispielsweise in einem Umformverfahren aus einem Blech gefertigt werden, was den Herstellungsaufwand noch weiter verringern kann.

Darüber hinaus können mit einer erfindungsgemäss wellenförmigen Hülse die Lastwerte des Ankers verbessert werden, insbesondere die Lastwerte bei Querlasten, wie sie beispielsweise im Falle eines Erdbebens auftreten können. Denn die erfindungsgemässe Wellenform kann eine gezielte Verformung der Hülse in Querrichtung ermöglichen, was, wie weiter unten im Zusammenhang mit den Figuren im Detail erläutert ist, im Hinblick auf die Querlastaufnahme vorteilhaft sein kann, insbesondere weil anstelle von Scherkräften Axialkraftkomponenten generiert werden können.

Erfindungsgemäss verlaufen die Wellentäler und die Wellenberge axial, was insbesondere beinhalten kann, dass in axial beabstandeten Querschnittsebenen der Hülse Wellenberge und Wellentäler jeweils übereinander liegen. Insbesondere kann die Hülse zumindest bereichsweise einen längs der Hülse konstanten Querschnitt aufweisen, das heisst die radiale Ausdehnung der Wellenberge und der Wellentäler ändert sich entlang der Längsachse nicht. Insbesondere können die Wellentäler und/oder die Wellenberge parallel zur Längsachse verlaufen.

Soweit hier von der Axialrichtung, der Radialrichtung und/oder der Umfangsrichtung die Rede ist, soll sich dies insbesondere auf die Längsachse des Bolzens, die Längsachse der Hülse und/oder die Längsachse des Ankers beziehen, wobei diese Achsen vorzugsweise zusammenfallen. Auch der Aussenradius und der Innenradius werden ausgehend von der Längsachse gemessen.

Vorzugsweise ist die Wellenform periodisch, was insbesondere beinhalten kann, dass sich die Wellenberge und die Wellentäler in regelmäßigen Abständen wiederholen. Hierdurch kann eine besonders hohe Symmetrie erreicht werden, was im Hinblick auf die Kraftübertragung vorteilhaft sein kann.

Die Hülse umgibt den Bolzen insbesondere ringförmig. Der Spreizbereich kann insbesondere im Bereich des vorderen Endes des Bolzens vorgesehen sein. Die Hülse ist vorzugsweise gegenüber dem Spreizbereich des Bolzens zumindest bereichsweise nach hinten versetzt am Bolzen angeordnet. Im Bereich seines rückwärtigen Endes weist der Bolzen vorzugsweise einen Lasteinleitungsbereich zum Einleiten von Zugkräften in den Bolzen auf. Beispielsweise kann der Lasteinleitungsbereich als Aussengewinde ausgeführt sein. Aber auch eine Ausführung des Lasteinleitungsbereichs als Bajonettmechanismus oder als einfacher querschnittsverbreiterter Kopf ist denkbar.

Am Spreizbereich des Bolzens ist zwischen dem Bolzen und dem Spreizelement ein Keilgetriebe gebildet, welches des Spreizelement bei axialen Zugkräften im Bolzen radial nach aussen drängen kann und somit den Anker in einem Bohrloch verankern kann. Insbesondere kann im Spreizbereich eine Schrägfläche des Bolzens vorgesehen sein, an welcher der Radius des Bolzens zur Rückseite des Bolzens hin abnimmt, welche also zur Vorderseite des Bolzens hin divergiert. Vorzugsweise ist der Spreizbereich ein Spreizkonus. Der Anker kann insbesondere ein Hinterschnittanker sein, der in einem hinterschnittenen Bohrloch verankert wird. In diesem Fall greift das Spreizelement beim Verankern in den Hinterschnitt des Bohrlochs ein. Der erfindungsgemässe Anker kann vorzugsweise zur Befestigung von Fassadenplatten an einer Unterkonstruktion dienen.

Das Spreizelement stützt sich axial an der Hülse ab. Die Hülse kann somit ein Widerlager für das Spreizelement bilden, welches ein Zurückweichen des Spreizelements nach hinten verhindert, wenn der Spreizbereich des Bolzens bei axialer Zugkraft im Bolzen gegen das Spreizelement wirkt. Die Hülse wiederum kann sich an ihrer Rückseite beispielsweise an einem Anbauteil abstützen. Die Hülse kann auch als Distanzhülse bezeichnet werden, insbesondere in Abgrenzung zu einer Spreizhülse.

Vorzugsweise ist der Bolzen einteilig, insbesondere monolithisch ausgebildet. Er kann aber auch mehrteilig ausgebildet sein, wobei insbesondere der Lasteinleitungsbereich und der Spreizbereich an unterschiedlichen Teilen des Bolzens angeordnet sein können. Die Hülse und/oder der Bolzen bestehen vorzugsweise aus einem Metallmaterial, insbesondere aus Stahl.

Insbesondere kann vorgesehen sein, dass die Höhe der Hülse zumindest so gross ist wie das 0.5-fache, vorzugsweise zumindest so gross wie das 1-fache des Durchmessers ihres Umkreises. Bei hohen Hülsen macht sich der erfindungsgemässe Effekt der Materialersparnis besonders deutlich bemerkbar.

Damit die Wellenform besonders effizient wirken kann, beträgt vorzugsweise die Differenz des Innenradius der Hülse zwischen Wellenberg und benachbartem Wellental zumindest bereichsweise zumindest das 0.5-fache, insbesondere zumindest das 1-fache der Wandstärke der Hülse in diesem Bereich. Aus demselben Grunde beträgt vorzugsweise die Differenz des Aussenradius der Hülse zwischen Wellenberg und benachbartem Wellental zumindest bereichsweise zumindest das 0.5-fache, insbesondere zumindest das 1-fache der Wandstärke der Hülse in diesem Bereich. Der Berg-Tal-Abstand beträgt also zumindest das 0.5-fache der Wandstärke.

Besonders vorteilhaft ist es, dass die Hülse, insbesondere auf zumindest 75%, vorzugsweise auf zumindest 90% ihrer Oberfläche, eine konstante Wandstärke aufweist. Dies kann im Hinblick auf die Fertigung vorteilhaft sein, da mit einem Blech als Ausgangsmaterial gearbeitet werden kann, und überdies kann dies im Hinblick auf die Kraftübertragung vorteilhaft sein. Abweichungen von der konstanten Wandstärke können beispielsweise an lokalen Hakenelementen gegeben sein, welche der Verankerung der Hülse mit der Wand des Bohrlochs dienen. In fachüblicher Weise kann die konstante Wandstärke Schwankungen der Wandstärke von bis zu ± 3% umfassen.

Weiterhin ist es zweckmässig, dass die Wellenform an der Hülse bis ganz nach hinten reicht, das heisst dass die Wellenform bis zu einer dem Spreizelement abgewandten Rückseite der Hülse reicht. Insbesondere kann hierdurch gewährleistet werden, dass die Wellenform des verankerten Ankers besonders nah an die Mündung des Bohrlochs heranreicht, was im Hinblick auf die Lastaufnahme vorteilhaft sein kann. Besonders bevorzugt ist es, dass die Wellenform die gesamte Hülse bedeckt, dass sich also die Wellenberge und die Wellentäler längs der gesamten Hülse erstrecken, von deren Vorderseite bis zu deren Rückseite. Eine solche Hülse kann besonders einfach zu fertigen sein und darüber hinaus für eine besonders gute Zentrierung im Bohrloch sorgen.

Das zumindest eine Spreizelement könnte beispielsweise ein Ring aus Draht sein, welcher den Bolzen umgibt. Besonders bevorzugt ist es jedoch, dass das zumindest eine Spreizelement ein Spreizlappen ist. Unter einem Spreizlappen kann insbesondere ein Element verstanden werden, welches sowohl in Umfangsrichtung als auch in Axialrichtung flächig ausgedehnt ist. Der Spreizlappen überspannt vorzugsweise maximal ein Viertel des Umkreises des Bolzens, das heisst die an der Längsachse gemessene Winkelausdehnung des Spreizlappens ist vorzugsweise kleiner als 90°. Hierdurch ist ein besonders zuverlässiges Spreizen und eine besonders gleichmässige Krafteinleitung möglich, insbesondere wenn mehrere solcher Spreizlappen vorgesehen sind. Der Spreizlappen kann eine oder mehrere radial verlaufende Ausnehmungen, vorzugsweise Durchgangsöffnungen, aufweisen, beispielsweise zum gezielten Beeinflussen des Biegeverhaltens.

Besonders zweckmässig ist es, dass der Spreizlappen einem Wellenberg axial vorgelagert ist. Dies kann insbesondere beinhalten, dass der Spreizlappen und der Wellenberg einerseits an der Längsachse einen gemeinsamen Winkelbereich überspannen, das heisst dass sich der Spreizlappen und der Wellenberg bei Blickrichtung in Richtung der Längsachse zumindest bereichsweise überlappen, und das andererseits der Spreizlappen zumindest bereichsweise axial weiter vorne liegt als der Wellenberg. Der Spreizlappen bildet somit zumindest bereichsweise eine Verlängerung des Wellenberges und/oder fluchtet zumindest bereichsweise mit dem Wellenberg. Da sich die Wellenberge radial vergleichsweise weit aussen befinden, befindet sich gemäss dieser Ausführungsform auch der Spreizlappen radial vergleichsweise weit aussen und kann somit schon bei einem geringen durch den Spreizbereich verursachten Biegewinkel besonders wirksam gegen die Wand des Bohrlochs wirken. Somit kann bei geringem Herstellungsaufwand eine besonders zuverlässige Verankerung bewirkt werden.

Insbesondere kann vorgesehen sein, dass der Anker eine Vielzahl von als Spreizlappen ausgebildete Spreizelemente aufweist, wobei jedem Wellenberg ein Spreizlappen axial vorgelagert ist. Hierdurch kann zusätzlich eine besonders gleichmässige Kraftübertragung gegeben sein. Sofern mehrere Spreizlappen vorgesehen sind, kann zumindest einer dieser Spreizlappen, vorzugsweise alle Spreizlappen, wie oben im Zusammenhang mit dem einen Spreizlappen beschrieben ausgeführt sein. Die Spreizlappen können zusammen eine Spreizhülse bilden, müssen dies aber nicht.

Eine weitere bevorzugte Ausgestaltung der Erfindung liegt darin, dass das zumindest eine Spreizelement einteilig mit der Hülse ausgebildet ist. Durch die Vereinigung von Spreizelement und Hülse kann ein besonders gut handhabbarer Anker erhalten werden. Insbesondere kann vorgesehen werden, dass das zumindest eine Spreizelement monolithisch mit der Hülse ausgebildet ist, wobei die monolithische Ausführung insbesondere beinhalten kann, dass das Spreizelement und die Hülse ohne Fügestellen zusammenhängen. Hierdurch kann bei einfacher Herstellung die Zuverlässigkeit der Verankerung des Ankers noch weiter erhöht werden, unter anderem weil das Spreizelement besonders zuverlässig positioniert wird.

Weiterhin ist es besonders vorteilhaft, dass in der Hülse ein axial verlaufender Schlitz vorgesehen ist, welcher die Hülse teilt. Der Schlitz teilt die Hülse, das heisst der Schlitz verläuft von der Vorderseite der Hülse bis zu deren Rückseite. Demgemäss umgreift die Hülse den Bolzen C-förmig. Diese Ausgestaltung ermöglicht eine besonders einfache Fertigung der Hülse aus einem Blechstreifen.

Zweckmässigerweise ist der Schlitz in einem Wellental angeordnet. Dies kann die Fertigung noch weiter vereinfachen und die Krafteinleitung noch weiter homogenisieren, insbesondere wenn sämtlichen Wellenbergen Spreizelemente axial vorgelagert sind.

Eine andere vorteilhafte Weiterbildung der Erfindung liegt darin, dass am Bolzen zumindest ein Vorsprung vorgesehen ist, der unter Bildung einer Verdrehsicherung an einem Wellenberg in die Hülse eingreift. Der Vorsprung greift demgemäss an der Hülseninnenseite in einen Wellenberg ein und sichert die Hülse somit formschlüssig gegenüber einer Drehung relativ zum Bolzen um die Längsachse. Somit kann die Wellenform in besonders einfacher Weise auch die Funktion einer Verdrehsicherung übernehmen. Vorzugsweise ist der Vorsprung ein axial verlaufender Steg. Hierdurch kann ein axial ausgedehnter Formschluss und somit eine besonders zuverlässige Verdrehsicherung realisiert werden. Vorteilhafterweise sind am Bolzen in Umfangsrichtung beabstandet mehrere Vorsprünge, insbesondere axial verlaufende Stege, vorgesehen, die unter Bildung einer Verdrehsicherung an jeweils einem Wellenberg in die Hülse eingreifen.

Insbesondere kann vorgesehen sein, dass der Vorsprung zumindest bereichsweise gegenüber dem Spreizbereich axial nach hinten versetzt am Bolzen angeordnet ist. Somit kann der Spreizbereich frei von Erhöhungen bleiben, die sich bei einer Fehlstellung der Hülse durch Blockieren der Axialbewegung potenziell negativ auf das Spreizverhalten auswirken könnten, das heisst die Zuverlässigkeit kann mit dieser Ausführungsform in besonders einfacher Weise noch weiter gesteigert werden.

Eine weitere bevorzugte Ausgestaltung der Erfindung liegt darin, dass sich die Hülse nach vorne hin verjüngt. Die Verjüngung kann insbesondere an den Wellenbergen vorgesehen sein, das heisst die Wellenberge laufen nach vorne hin auf die Längsachse zu. Mittels einer derart ausgestalteten Hülse können in besonders einfacher Weise Durchmesserabweichungen im Bohrloch ausgeglichen werden und es kann ein besonders guter Sitz im Bohrloch erhalten werden. Vorzugsweise kann sich die Hülse konisch nach vorne hin verjüngen. Insbesondere kann dies beinhalten, dass die Wellenberge Erzeugende eines Konus definieren.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung eines erfindungsgemässen Ankers;
- Figur 2:: eine weitere perspektivische Darstellung des Ankers aus Figur 1, wobei der Anker im Falle von Figur 2 in einem Bohrloch in einem Substrat angeordnet ist;
- Figur 3:: eine Ansicht der Hülse des Ankers der Figuren 1 und 2 von oben;
- Figur 4:: eine Längsschnittansicht des Ankers der Figuren 1 und 2;
- Figuren 5 und 6:: der Anker der Figuren 1 und 2 bei Querbelastung, in Figur 5 im Querschnitt auf Höhe der Hülse und in Figur 6 im Längsschnitt; und
- Figuren 7 und 8:: eine Abwandlung des Ankers der Figuren 1 und 2, in Figur 7 im Querschnitt auf Höhe der Hülse und in Figur 8 in Seitenansicht.

Gleich wirkende Elemente sind in den Figuren mit denselben Bezugszeichen gekennzeichnet.

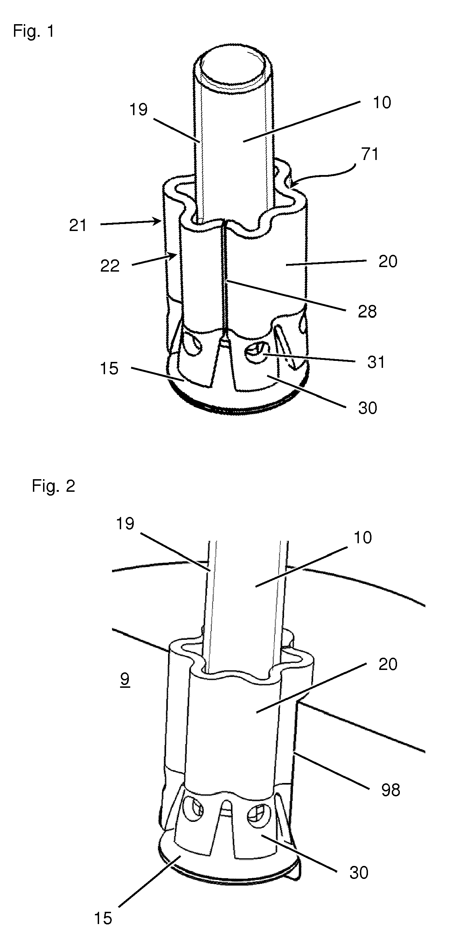

Die Figuren 1 bis 6 zeigen eine Ausführungsform eines erfindungsgemässen Ankers. Der Anker weist einen länglichen Bolzen 10 auf, der im Bereich seines rückwärtigen Endes einen als Aussengewinde ausgebildeten Lasteinleitungsbereich 19 und im Bereich seines vorderen Endes einen zumindest annähernd konischen Spreizbereich 15 aufweist, in welchem der Querschnitt des Bolzens 10 nach vorne hin zunimmt.

Der Anker weist ferner eine Hülse 20 auf, welche den Bolzen 10 ringförmig umgibt. An der Vorderseite der Hülse 20 sind mehrere, beispielhaft sechs, Spreizelemente 30 angeordnet. Diese Spreizelemente 30 sind als zylinderschalenabschnittsartige Spreizlappen ausgebildet und sind einteilig und monolithisch mit der Hülse 20 ausgeführt. Die Spreizelemente 30 sind zumindest annähernd äquidistant um den Bolzen 10 herum angeordnet. Wie insbesondere in Figur 1 gezeigt ist, weisen die Spreizelemente 30 an ihren Übergängen zur Hülse 20 jeweils eine als Durchgangsöffnung 31 ausgebildete Ausnehmung auf, mit der das Biegeverhalten eingestellt werden kann.

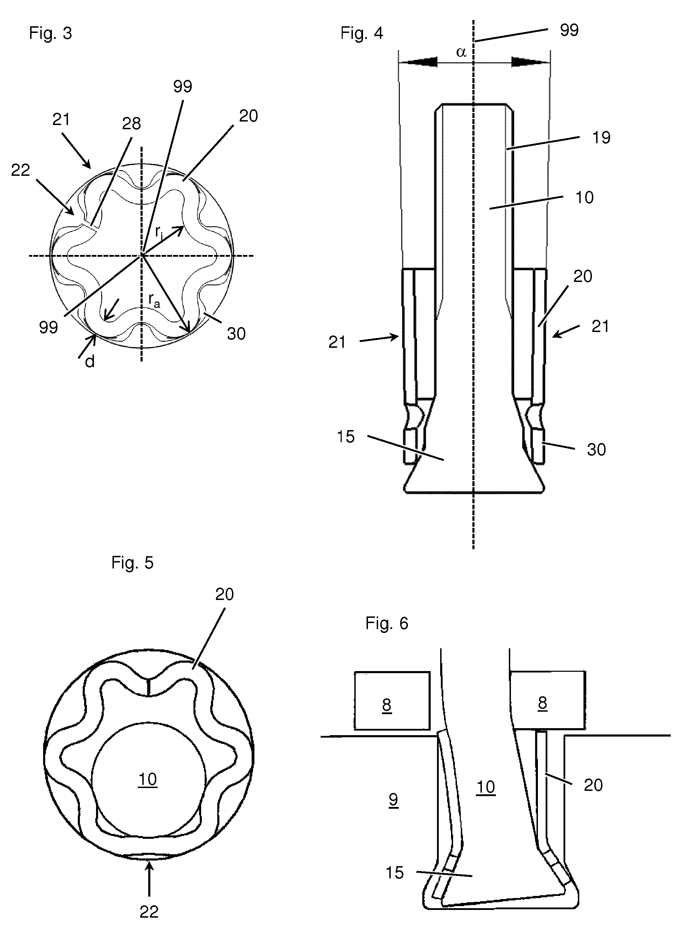

Bei der in Figur 2 dargestellten bestimmungsgemässen Anwendung des Ankers wird der Anker mit seiner Vorderseite voran in ein Bohrloch in einem Substrat 9 eingeführt. Tritt nun eine Zugkraft im Bolzen 10 auf, so wird der Spreizbereich 15 des Bolzens 10 axial in die Spreizelemente 30 eingezogen. Da sich der Bolzen 10 am Spreizbereich 15 nach vorne hin erweitert, wird hierbei die Zugkraft im Bolzen 10 in eine radiale Kraftkomponente auf die Spreizelemente 30 umgewandelt, was die Spreizelemente 30 an die Wand 98 des Bohrlochs anpresst und den Anker im Substrat 9 verankert. Die Hülse 20 bildet ein axiales Widerlager für die Spreizelemente 30, welches verhindert, dass die Spreizelemente 30 nach hinten zurückweichen. Die Hülse 20 wiederum wird an der Rückseite 71 der Hülse 20 von einem lediglich in Figur 6 gezeigten Anbauteil 8 gegengehalten.

Die Hülse 20 weist eine Wellenform mit einer Vielzahl von Wellenbergen 21 und Wellentälern 22 auf, die sich in Umfangsrichtung der Hülse 20 abwechseln. Die Wellenberge 21 und die Wellentäler 22 erstrecken sich jeweils axial entlang der Hülse 20, das heisst in Richtung der Längsachse 99. Die Wellenberge 21 und die Wellentäler 22 bedecken dabei die gesamte Hülse 20 und reichen insbesondere bis zur Rückseite 71 der Hülse 20. Wie insbesondere in Figur 3 erkennbar ist, weist an einem Wellenberg 21 sowohl der, ausgehend von der Längsachse 99 gemessene, Innenradius rᵢ der Hülse 20 als auch der, ausgehend von der Längsachse 99 gemessene, Aussenradius rₐ der Hülse 20 jeweils ein lokales Maximum auf. An einem Wellental 22 hingegen weist sowohl der Innenradius rᵢ der Hülse 20 als auch der Aussenradius rₐ der Hülse 20 jeweils ein lokales Minimum auf. Die Wandstärke d der Hülse 20 ist auf der Wellenform im Wesentlichen konstant.

Die Spreizelemente 30 sind jeweils einem Wellenberg 21 vorgelagert und fluchten axial mit diesem Wellenberg 21. Insbesondere schliesst sich somit der Innenradius rᵢ und der Aussenradius rₐ jedes Spreizelements 30 an den jeweils benachbarten Wellenberg 21 an. Dies ist insbesondere in Figur 3 erkennbar.

Die Hülse 20 weist einen Schlitz 28 auf, der sich axial durch die gesamte Hülse 20 hindurch erstreckt, und der die Hülse 20 teilt. Die Hülse 20 weist somit eine C-Form auf, welche den Bolzen 10 umgreift. Der Schlitz 28 ist in einem Wellental 22 angeordnet und somit zu den Spreizelementen 30 in Umfangsrichtung versetzt.

Wie insbesondere Figur 4 zeigt, weist die Hülse 20 eine Form auf, die sich nach vorne, das heisst zum Spreizbereich 15 des Bolzens 10 hin, leicht verjüngt. Die Verjüngung, die insbesondere konisch sein kann, ist insbesondere an den Wellenbergen 21 gegeben, das heisst die Wellenberge 21 laufen nach vorne hin auf die Längsachse 99 zu. Durch die sich verjüngende Form der Hülse 20 und deren Wellenform kann sich diese Hülse 20 selbst zentrieren, insbesondere auch in einem nicht exakt kreisrunden Bohrloch. Der Öffnungswinkel α der Verjüngung ist vorzugsweise kleiner als 10°, insbesondere kleiner als 5°.

Wie insbesondere Figur 3 zeigt, ist der Berg-Tal-Abstand, das heisst die Differenz des Innenradius rᵢ der Hülse 20 und/oder des Aussenradius rₐ der Hülse 20 zwischen Wellenbergen 21 und benachbarten Wellentälern 22 grösser als die Wandstärke d. Aufgrund der Wellenform kann sich die Hülse 20 sowohl an der Wand 98 des Bohrlochs abstützen, nämlich an den Wellenbergen 21, also auch am Bolzen 10, nämlich an den Wellentälern 22, und dies obwohl der Ringspalt zwischen Bolzen 10 und Wand 98 des Bohrlochs grösser ist als die Wandstärke d der Hülse 20.

Darüber hinaus kann durch die Wellenform ein besonderes Lastverhalten bei Querbelastung, beispielsweise erzeugt durch Erdbeben, erhalten werden. Dies ist insbesondere in den Figuren 5 und 6 gezeigt ist. Diese Figuren zeigen den Fall, bei dem über ein Anbauteil 8 eine Querbelastung auf den Bolzen 10 aufgebracht wird. In diesem Fall kann der in Querlastrichtung vor dem Bolzen 10 liegende Bereich der Wellenform (unten in Figur 5) durch den Bolzen 10 flachgedrückt werden. Es wird also bei seismischer Belastung ein gewisser Verformungsweg zugelassen, was im Vergleich zu einer steifen, nicht nachgiebigen Hülse eine Verbesserung des Lastverhaltens zur Folge haben kann.

Insbesondere kann die Verformung der Hülse 20 wie in Figur 6 gezeigt ein leichtes Kippen des Bolzens 10 zur Folge haben (nach links in Figur 6), welche den Spreizbereich 15 auf der der Querlastrichtung abgewandten Seite (rechts in Figur 6) axial zur Hülse 20 hin zieht und den Anker somit in Hauptlastrichtung belastet. Die an sich quer zur Hauptlastrichtung wirkende Querbelastung kann durch diesen Mechanismus in eine Lastkomponente in Hauptlastrichtung transformiert werden.

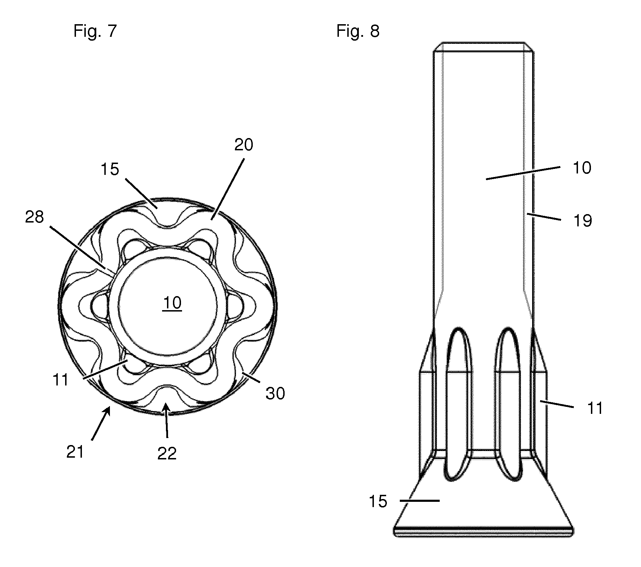

Die Figuren 7 und 8 zeigen eine Modifikation des Ankers der Figuren 1 bis 6. Gemäss der Modifikation der Figuren 7 und 8 weist der Bolzen 10 radial nach aussen vorstehende Vorsprünge 11 auf, die als axial und parallel zueinander verlaufende Stege ausgeführt sind. Die Vorsprünge 11 greifen jeweils von innen in einen Wellenberg 21 ein und koppeln somit die Hülse 20 und den Bolzen 10 drehfest miteinander, das heisst sie bilden eine Verdrehsicherung zwischen Hülse 20 und Bolzen 10. Wie insbesondere Figur 8 zeigt sind die Vorsprünge 11 dabei gegenüber dem Spreizbereich 15 axial nach hinten versetzt, das heisst zum Lasteinleitungsbereich 19 hin versetzt, so dass sie den Spreizvorgang der Spreizelemente 30 nicht beeinträchtigen.

## Patentansprüche

1. Anker mit einer Hülse (20), einem Bolzen (10), welcher die Hülse (20) durchläuft, und zumindest einem Spreizelement (30), welches der Hülse (20) axial vorgelagert ist und welches sich axial an der Hülse (20) abstützt, wobei der Bolzen (10) einen Spreizbereich (15) für das Spreizelement (30) aufweist,
**dadurch gekennzeichnet,**
**dass** die Hülse (20) eine Wellenform mit axial verlaufenden Wellenbergen (21), in denen sowohl der Aussenradius (rₐ) der Hülse (20) als auch der Innenradius (rᵢ) der Hülse (20) jeweils ein Maximum aufweisen, und mit axial verlaufenden Wellentälern (22), in denen sowohl der Aussenradius (rₐ) der Hülse (20) als auch der Innenradius (rᵢ) der Hülse (20) jeweils ein Minimum aufweisen, aufweist.

2. Anker nach Anspruch 1,
**dadurch gekennzeichnet,**
**dass** die Hülse (20), insbesondere auf zumindest 90% ihrer Oberfläche, eine konstante Wandstärke (d) aufweist.

3. Anker nach einem der vorstehenden Ansprüche,
**dadurch gekennzeichnet,**
**dass** die Wellenform bis zu einer dem Spreizelement (30) abgewandten Rückseite (71) der Hülse (20) reicht und/oder dass die Wellenform die gesamte Hülse (20) bedeckt.

4. Anker nach einem der vorstehenden Ansprüche,
**dadurch gekennzeichnet,**
**dass** das zumindest eine Spreizelement (30) ein Spreizlappen ist, der einem Wellenberg (21) axial vorgelagert ist.

5. Anker nach einem der vorstehenden Ansprüche,
**dadurch gekennzeichnet,**
**dass** der Anker eine Vielzahl von als Spreizlappen ausgebildete Spreizelemente (30) aufweist, wobei jedem Wellenberg (21) ein Spreizlappen axial vorgelagert ist.

6. Anker nach einem der vorstehenden Ansprüche,
**dadurch gekennzeichnet,**
**dass** das zumindest eine Spreizelement (30) einteilig mit der Hülse (20) ausgebildet ist.

7. Anker nach einem der vorstehenden Ansprüche,
**dadurch gekennzeichnet,**
**dass** in der Hülse (20) ein axial verlaufender Schlitz (28) vorgesehen ist, welcher die Hülse (20) teilt, wobei der Schlitz (28) in einem Wellental (22) angeordnet ist.

8. Anker nach einem der vorstehenden Ansprüche,
**dadurch gekennzeichnet,**
**dass** am Bolzen (10) zumindest ein Vorsprung (11) vorgesehen ist, der unter Bildung einer Verdrehsicherung an einem Wellenberg (21) in die Hülse (20) eingreift.

9. Anker nach Anspruch 8,
**dadurch gekennzeichnet,**
**dass** der Vorsprung (11) zumindest bereichsweise gegenüber dem Spreizbereich (15) axial nach hinten versetzt am Bolzen (10) angeordnet ist.

10. Anker nach einem der vorstehenden Ansprüche,
**dadurch gekennzeichnet,**
**dass** sich die Hülse (20) nach vorne hin verjüngt.
